(19) Europäisches Patentamt
European Patent Office
Office européen des brevets

(11) **EP 3 738 709 B1**

(12) **EUROPEAN PATENT SPECIFICATION**

(45) Date of publication and mention
of the grant of the patent:
**20.11.2024 Bulletin 2024/47**

(21) Application number: **19738356.5**

(22) Date of filing: **07.01.2019**

(51) International Patent Classification (IPC):
**B23K 26/364** *(2014.01)*   **B23K 26/064** *(2014.01)*
**B23K 26/70** *(2014.01)*   **C03B 33/09** *(2006.01)*
**B23K 26/382** *(2014.01)*   **B32B 17/10** *(2006.01)*
**C03B 33/00** *(2006.01)*   **B23K 26/0622** *(2014.01)*
**B23K 103/16** *(2006.01)*   **C03B 33/02** *(2006.01)*
**C03B 33/033** *(2006.01)*   **C03B 33/07** *(2006.01)*
**C03C 1/00** *(2006.01)*

(52) Cooperative Patent Classification (CPC):
**B23K 26/0624; B23K 26/364; B23K 26/382;
B32B 17/10; B32B 27/306; C03B 33/0222;
C03B 33/033; C03B 33/074;** B23K 2103/172

(86) International application number:
**PCT/JP2019/000080**

(87) International publication number:
**WO 2019/138967 (18.07.2019 Gazette 2019/29)**

(54) **SEPARATION METHOD FOR COMPOSITE MATERIAL**

TRENNVERFAHREN FÜR VERBUNDSTOFF

PROCÉDÉ DE SÉPARATION POUR MATÉRIAU COMPOSITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2018 JP 2018003324**

(43) Date of publication of application:
**18.11.2020 Bulletin 2020/47**

(73) Proprietor: **Nitto Denko Corporation
Ibaraki-shi, Osaka 567-8680 (JP)**

(72) Inventor: **MATSUO, Naoyuki
Ibaraki-shi, Osaka 567-8680 (JP)**

(74) Representative: **Hoffmann Eitle
Patent- und Rechtsanwälte PartmbB
Arabellastraße 30
81925 München (DE)**

(56) References cited:
**JP-A- 2006 192 478    JP-A- 2016 078 038
JP-A- 2016 164 101    JP-A- 2016 224 307
JP-A- 2017 509 568    JP-A- H10 506 087
TW-A- 201 219 142    US-A1- 2002 115 235
US-A1- 2016 009 066**

EP 3 738 709 B1

**Description**

[Technical Field]

The present invention relates to a method for dividing a composite material in which a brittle material layer and a resin layer are laminated. In particular, the present invention relates to a method capable of dividing a composite material without causing a crack in an end face of the brittle material layer after being divided, and serious thermal deterioration of an end face of the resin layer after being divided.

[Background Art]

On the outermost surface side of an image display device for use in a television or a personal computer, in many cases, a protective material for protecting the image display device is disposed. As the protective material, a glass plate is typically used.

However, as downsizing, thinning, and weight reduction of image display device progress as in image display devices used for smartphones, smart watches, in-vehicle displays, and the like, there is a rising demand for thin protective materials having both a protective function and an optical function. Examples of such a protective material include a composite material in which a brittle material layer such as of glass having a protective function, and a resin layer such as of a polarizing film having an optical function are laminated. Such a composite material needs to be divided into a predetermined shape and a predetermined size according to its application.

Conventionally, as the method for dividing a brittle material such as glass, water jet processing, laser processing, end mill processing, punching processing, and the like are known. These dividing methods require polishing, cleaning and drying treatments (these are referred to as post-processing) of end faces to improve the quality of end face of the brittle material after being divided, thus resulting in high process cost. Further, when such a dividing method is applied to a composite material in which a brittle material layer and a resin layer are laminated, there is a risk that the resin layer is peeled off by the polishing treatment, and the quality of the resin layer is deteriorated as a result of being immersed in a cleaning liquid during the cleaning treatment.

On the other hand, there is a known technique for precision processing of a brittle material by radiating a laser light (ultrashort pulse laser light) oscillated from an ultrashort pulse laser source, which is different from a laser source used in the general laser processing as described above, to a brittle material such as glass (see, for example, JP6239461B). The processing technique using an ultrashort pulse laser light as described in JP6239461Bis excellent in productivity and also excellent in quality without causing cracks in end faces after being processed, and therefore is an epoch-making technology that may not require post-processing such as polishing treatment of end faces depending on the required level of quality.

The processing technique using an ultrashort pulse laser light is effective for a single body of brittle material such as glass. However, using such a technique for collectively dividing the composite material, in which a brittle material layer and a resin layer are laminated, is difficult, because it causes deterioration of the quality of end face after dividing. For example, even if an ultrashort pulse laser light is radiated from the brittle material layer side of the composite material, the end face of the resin layer will suffer from thermal deterioration caused by the ultrashort pulse laser light that is transmitted without being consumed to remove the brittle material forming the brittle material layer.

Reference is made to John Lopez, et al., "GLASS CUTTING USING ULTRASHORT PULSED BESSEL BEAMS", [online], Oct. 2015, International Congress on Applications of Lasers & Electro-Optics (ICALEO), [searched on Dec. 20, 2017], the Internet (URL: https://www.researchgate.net/publication/284617626_GLASS_CUTTING_USING_ULTRASHORT_PULSED_BESSEL_BEAMS). Note that this publication describes that in the processing technique utilizing an ultrashort pulse laser light, a filamentation phenomenon of the ultrashort pulse laser light is utilized, and a multi-focus optical system or a Bessel beam optical system is applied for the ultrashort pulse laser source.

[Another example of the prior art can be found in document TW 201 219 142 A.

[Summary of Invention]

[Technical Problem]

The present invention has been made to solve the problems of prior art as described above, and has its object to provide a method capable of dividing a composite material without causing a crack in an end face of a brittle material layer after being divided, and serious thermal deterioration of an end face of a resin layer after being divided.

[Solution to Problem]

In order to solve the above problems, the present inventors have conducted diligent studies and have found that it is possible to divide a composite material without causing a crack in an end face of a brittle material layer after being divided and serious thermal deterioration of an end face of a resin layer after being divided if the brittle material forming the brittle material layer is removed by radiating a laser light oscillated from an ultrashort pulse laser source to the brittle material layer after the resin forming the resin layer is removed by radiating a laser light oscillated from a laser source used in general laser processing to the resin layer, thereby completing the present invention.

That is, in order to solve the above problems, the present invention provides a method for dividing a composite material in which a brittle material layer and a resin layer are laminated, the method comprising: a resin removing step of forming a processed groove along a scheduled dividing line of the composite material by radiating a laser light oscillated from a laser source to the resin layer along the scheduled dividing line and thereby removing the resin forming the resin layer; a brittle material removing step of forming a processing mark along the scheduled dividing line by radiating a laser light oscillated from an ultrashort pulse laser source to the brittle material layer along the scheduled dividing line and thereby removing the brittle material forming the brittle material layer, after the resin removing step; and a composite material dividing step of dividing the composite material by applying an external force along the scheduled dividing line, after the brittle material removing step, wherein the processing mark formed in the brittle material removing step is perforated through holes along the scheduled dividing line, and a pitch of the through holes is 10 $\mu$m or less, as a first method.

According to the first method of the present invention, after forming a processed groove along a scheduled dividing line by removing the resin forming the resin layer in the resin removing step, a processing mark is formed along the same scheduled dividing line by removing the brittle material forming the brittle material layer in the brittle material removing step. Since the processing mark formed in the brittle material removing step is perforated through holes along the scheduled dividing line, and the pitch of the through holes is as small as 10 $\mu$m or less, the composite material can be divided with relative ease by applying an external force along the scheduled dividing line in the composite material dividing step.

According to the first method of the present invention, in the brittle material removing step, since the brittle material forming the brittle material layer is removed by radiating a laser light oscillated from the ultrashort pulse laser source to the brittle material layer, no crack occurs in an end face of the brittle material layer after being divided. Further, according to the first method of the present invention, since, before the brittle material removing step, the resin forming the resin layer is removed by radiating a laser light oscillated from a laser source to the resin layer in the resin removing step, serious thermal deterioration will not occur in an end face of the resin layer after being divided. That is, according to the first method of the present invention, it is possible to divide the composite material without causing a crack in an end face of the brittle material layer after being divided, and serious thermal deterioration of an end face of the resin layer after being divided.

Note that in the first method according to the present invention, "radiating a laser light to the resin layer along the scheduled dividing line of the composite material" means radiating a laser light to the resin layer along the scheduled dividing line when viewed from the thickness direction of the composite material (the laminating direction of the brittle material layer and the resin layer). Further, in the first method according to the present invention, "radiating a laser light to the brittle material layer along the scheduled dividing line" means radiating a laser light to the brittle material layer along the scheduled dividing line when viewed from a thickness direction of the composite material (the laminating direction of the brittle material layer and the resin layer). The same applies to a second method according to the present invention to be described below.

Further, in the first method according to the present invention, the type of the laser source used in the resin removing step is not particularly limited as long as the resin forming the resin layer can be removed by the oscillated laser light. However, it is preferable to use a $CO_2$ laser source or a CO laser source that oscillates a laser light having a wavelength in the infrared range in that the relative moving speed (processing speed) of the laser light with respect to the composite material can be increased. The same applies to the second method according to the present invention to be described below.

In the first method according to the present invention, since the processing mark formed in the brittle material removing step is perforated through holes, in order to divide the composite material, a composite material dividing step of applying an external force along the scheduled dividing line is needed after the brittle material removing step.

However, in the brittle material removing step, if the relative moving speed of the laser light oscillated from the ultrashort pulse laser source along the scheduled dividing line with respect to the brittle material layer is set to be small, or the repeating frequency of the pulse oscillation of the ultrashort pulse laser source is set to be large, through holes (long hole) integrally connected along the scheduled dividing line are formed as a processing mark. For this reason, the composite material will be divided without an external force applied along the scheduled dividing line after the brittle material is removed.

That is, in order to solve the above problems, the present invention provides a method for dividing a composite material in which a brittle material layer and a resin layer are laminated, the method comprising: a resin removing step of removing the resin forming the resin layer and thereby forming a processed groove along a scheduled dividing line of the composite material by radiating a laser light oscillated from a laser source to the resin layer along the scheduled dividing line; and a brittle material removing step of dividing the composite material by radiating a laser light oscillated from an ultrashort pulse laser source to the brittle material layer along the scheduled dividing line and thereby removing the brittle material forming the brittle material layer after the resin removing step; a composite material dividing step of dividing the composite material performed concurrently with the brittle material removing step, as the second method.

According to the second method of the present invention as well, it is possible to divide the composite material without causing a crack in an end face of the brittle material layer after being divided, and serious thermal deterioration of an end face of the resin layer after being divided.

In the first and second methods according to the present invention, a residue of the resin may be generated at the bottom of the processed groove formed by removing the resin forming the resin layer in the resin removing step. In this case, when the laser light oscillated from the ultrashort pulse laser source is radiated to the brittle material layer from the processed groove side in the brittle material removing step, the laser light is affected by the residue of the resin and there is a risk that a processing mark suitable for dividing cannot be formed in the brittle material layer. On the other hand, when the power of the laser light oscillated from the laser source is excessively increased to surely remove the resin to form a processed groove, it is not easy to avoid damage to the brittle material layer. Even if a laser light oscillated from an ultrashort pulse laser source is radiated to the brittle material layer that has been damaged and distorted from the processed groove side, there is also a risk that an appropriate processing mark cannot be formed.

To avoid a risk that an appropriate processing mark cannot be formed in the brittle material layer as described above, preferably, in the brittle material removing step of the first and second methods according to the present invention, the laser light oscillated from the ultrashort pulse laser source is radiated to the brittle material layer from an opposite side to the processed groove formed in the resin removing step.

According to the above described preferable method, since the laser light oscillated from the ultrashort pulse laser source is radiated from the opposite side to the processed groove, it is possible to form an appropriate processing mark in the brittle material layer without being affected by a residue of the resin even if the residue has been generated at the bottom of the processed groove.

Alternatively, to avoid a risk that an appropriate processing mark cannot be formed in the brittle material layer, preferably, the first and second methods according to the present invention further comprise a cleaning step of removing a residue of the resin forming the resin layer by cleaning the processed groove formed in the resin removing step before the brittle material removing step, wherein in the brittle material removing step, the laser light oscillated from the ultrashort pulse laser source is radiated to the brittle material layer from the processed groove side.

According to the above described preferable method, since the residue of the resin forming the resin layer is removed in the cleaning step, even if the laser light oscillated from the ultrashort pulse laser source is radiated to the brittle material layer from the processed groove side in the brittle material removing step, the laser light will not be affected by the residue of resin, and it is possible to form an appropriate processing mark in the brittle material layer.

In the first and second methods according to the present invention, preferably, in the brittle material removing step, the brittle material forming the brittle material layer is removed by utilizing a filamentation phenomenon of the laser light oscillated from the ultrashort pulse laser source, or applying a multi-focus optical system or a Bessel beam optical system to the ultrashort pulse laser source.

According to the above described preferable method, it is possible to form a processing mark having high dimensional accuracy in the brittle material layer.

In the first and second methods according to the present invention, the resin layer can be exemplified by an optical film such as of a polarizing film.

[Advantageous Effects of Invention]

According to the present invention, it is possible to divide a composite material without causing a crack in an end face of the brittle material layer after being divided, and serious thermal deterioration of an end face of the resin layer after being divided.

[Brief Description of Drawings]

[Figure 1] Figures 1A to 1C are explanatory diagrams to schematically illustrate the procedure of a method for dividing a composite material according to a first embodiment of the present invention.

[Figure 2] Figures 2A and 2B are explanatory diagrams to schematically illustrate the procedure of a method for dividing a composite material according to the first embodiment of the present invention.

[Figure 3] Figures 3A to 3D are explanatory diagrams to schematically illustrate the procedure of a method for dividing a composite material according to a third embodiment of the present invention.

[Figure 4] Figures 4A to 4C are diagrams to schematically illustrate an outline of the test relating to Example 1.

[Description of Embodiments]

<First embodiment>

Hereinafter, a method for dividing a composite material according to a first embodiment of the present invention will be described with appropriate reference to the appended drawings.

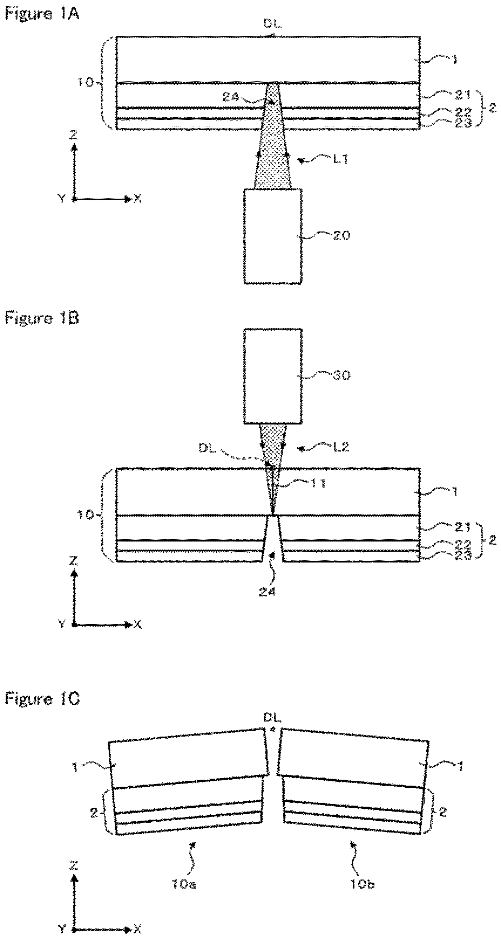

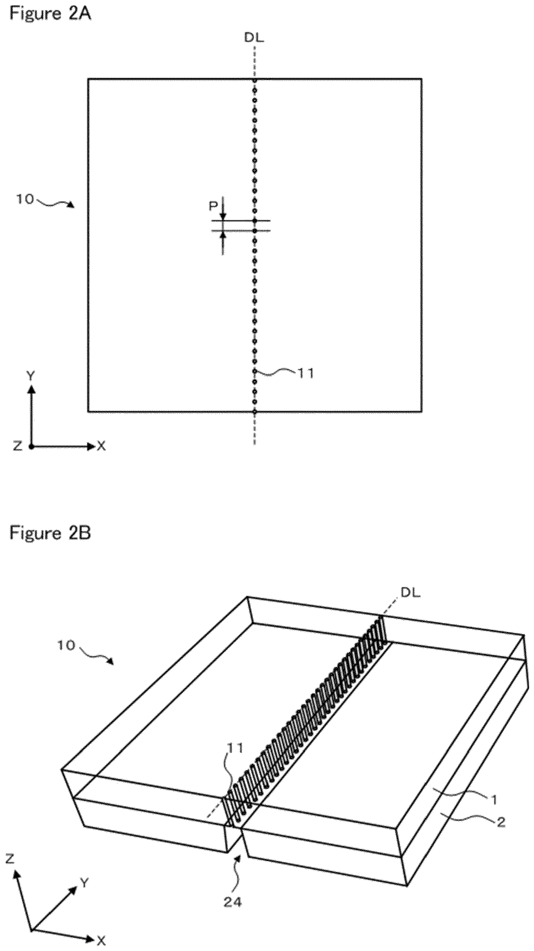

Figures 1 and 2 are explanatory diagrams to schematically illustrate the procedure of a method for dividing a composite material according to the first embodiment of the present invention. Figure 1A is a sectional view to show a resin removing step of the dividing method according to the first embodiment, Figure 1B is a sectional view to show a brittle material removing step of the dividing method according to the first embodiment, and Figure 1C is a sectional view to show a composite material dividing step of the dividing method according to the first embodiment. Figure 2A is a plan view to show a brittle material removing step of the dividing method according to the first embodiment, and Figure 2B is a perspective view to show the brittle material removing step of the dividing method according to the first embodiment. Note that illustration of an ultrashort pulse laser source 30 is omitted in Figure 2.

The dividing method according to the first embodiment is a method for dividing a composite material 10, in which a brittle material layer 1 and a resin layer 2 are laminated, in a thickness direction (a lamination direction of the brittle material layer 1 and the resin layer 2, that is, a vertical direction, Z direction, of Figure 1).

The brittle material layer 1 and the resin layer 2 are laminated by any suitable method. For example, the brittle material layer 1 and the resin layer 2 can be laminated by a so-called roll-to-roll scheme. That is, the brittle material layer 1 and the resin layer 2 can be laminated by bonding a long brittle material layer 1 and a long resin layer 2 together in such a way that longitudinal directions thereof are lined up while conveying them in their longitudinal direction. Moreover, it is also possible to cut the brittle material layer 1 and the resin layer 2 into a predetermined shape respectively, and thereafter laminate them. The brittle material layer 1 and the resin layer 2 are typically laminated via any suitable adhesive or bonding agent (not shown).

The brittle material for forming the brittle material layer 1 can be exemplified by glass and single crystal silicon or polycrystalline silicon.

Examples of the glass include soda-lime glass, borate glass, aluminosilicate glass, quartz glass, and sapphire glass according to classification by composition. Further, according to classification by alkali component, non-alkali glass and low-alkali glass can be exemplified. The content of alkali metal component (for example, $Na_2O$, $K_2O$, $Li_2O$) in the glass is preferably 15% by weight or less, and more preferably 10% by weight or less.

The thickness of the brittle material layer 1 is preferably 200 $\mu$m or less, more preferably 150 $\mu$m or less, further preferably 120 $\mu$m or less, and further preferably 100 $\mu$m or less. On the other hand, the thickness of the brittle material layer 1 is preferably 5 $\mu$m or more, and more preferably 20 $\mu$m or more. When the thickness of the brittle material layer 1 is in such a range, it can be laminated with the resin layer 2 by the roll-to-roll scheme.

When the brittle material forming the brittle material layer 1 is glass, the light transmittance of the brittle material layer 1 at a wavelength of 550 nm is preferably 85% or more. When the brittle material forming the brittle material layer 1 is glass, the refractive index of the brittle material layer 1 at a wavelength of 550 nm is preferably 1.4 to 1.65. When the brittle material forming the brittle material layer 1 is glass, the density of the brittle material layer 1 is preferably 2.3 $g/cm^3$ to 3.0 $g/cm^3$, and more preferably 2.3 $g/cm^3$ to 2.7 $g/cm^3$.

When the brittle material forming the brittle material layer 1 is glass, as the brittle material layer 1, a commercially available glass plate may be used as it is, or a commercially available glass plate may be polished to a desired thickness for use. Examples of commercially available glass plates include "7059", "1737" or "EAGLE2000" manufactured by Corning Inc., "AN100" manufactured by Asahi Glass Co. Ltd., "NA-35" manufactured by NH Techno Glass Co., Ltd., and "OA-10" manufactured by Nippon Electric Glass Co., Ltd., and "D263" or "AF45" manufactured by Schott AG.

The resin layer 2 can be exemplified by a single layer film formed of an acrylic resin such as polyethylene terephthalate (PET), polyethylene (PE), polypropylene (PP), and polymethylmethacrylate (PMMA); and a plastic material such as cyclic olefin polymer (COP), cyclic olefin copolymer (COC), polycarbonate (PC), Urethane resin, polyvinyl alcohol (PVA), polyimide (PI), polytetrafluoroethylene (PTFE), polyvinyl chloride (PVC), polystyrene (PS), triacetyl cellulose (TAC), polyethylene naphthalate (PEN), ethylene-vinyl acetate (EVA), polyamide (PA), silicone resin, epoxy resin, liquid crystal polymer, and various resin foams, or a laminated film composed of multiple layers.

When the resin layer 2 is a laminated film composed of a plurality of layers, various adhesives such as acrylic adhesives, urethane adhesives, and silicone adhesives, or bonding agents may lie between layers.

Further, a conductive inorganic film of such as indium tin oxide (ITO), Ag, Au, and Cu may be formed on the surface of the resin layer 2.

The dividing method according to the first embodiment is suitably used particularly when the resin layer 2 is a various optical film such as a polarizing film and a phase difference film used for a display.

The thickness of the resin layer 2 is preferably 20 to 500 $\mu$m.

Note that, in the example shown in Figure 1, an example in which the resin layer 2 is a laminated film in which a polarizing film 21 and a release liner 23 are laminated via an adhesive 22 is shown.

The dividing method according to the first embodiment includes a resin removing step, a brittle material removing step, and a composite material dividing step. Hereinafter, each step will be described successively.

[Resin removing step]

As shown in Figure 1A, in the resin removing step, a processed groove 24 along a scheduled dividing line is formed by removing the resin forming the resin layer 2 by radiating a laser light L1 oscillated from the laser source 20 to the resin layer 2 along the scheduled dividing line of the composite material 10.

An example shown in Figures 1 and 2 shows a case in which, out of two orthogonal directions (X direction and Y direction) in a plane (XY two-dimensional plane) of the composite material 10, a straight line DL extending in the Y direction is the scheduled dividing line. The scheduled dividing line DL can be actually drawn on the composite material 10 as a visually recognizable indication, and it is also possible to input the coordinates of the scheduled dividing line DL in advance in a control device (not shown) which controls the relative positional relationship between the laser light L1 and the composite material 10 on the XY two-dimensional plane. The scheduled dividing line DL shown in Figures 1 and 2 is an imaginary line whose coordinates are inputted in advance to the control device and which is not actually drawn on the composite material 10. Note that the scheduled dividing line DL is not limited to a straight line, and may be a curved line. By determining the scheduled dividing line DL according to the application of the composite material 10, the composite material 10 can be divided into any shape according to the application.

In the first embodiment, a $CO_2$ laser source which oscillates a laser light L1 having a wavelength of 9 to 11 $\mu$m in the infrared range is used as the laser source 20.

However, the present invention, without being limited to this, can use a CO laser source which oscillates a laser light L1 having a wavelength of 5 $\mu$m as the laser source 20.

Further, as the laser source 20, it is also possible to use a pulsed laser source that oscillates visible light and/or ultraviolet rays (UV). As a pulse laser source that oscillates visible light and/or UV can be exemplified by those which oscillate laser light L1 having a wavelength of 532 nm, 355 nm, 349 nm, or 266 nm (higher-order harmonics of Nd: YAG, Nd: YLF, or a solid laser source using YVO4 as a medium), an excimer laser source which oscillates a laser light L1 having a wavelength of 351 nm, 248 nm, 222 nm, 193 nm or 157 nm, and an F2 laser source which oscillates a laser light L1 having a wavelength of 157 nm.

Further, as the laser source 20, it is also possible to use a pulsed laser source which oscillates a laser light L1 having a wavelength outside the ultraviolet range and having a pulse width of femtosecond or picosecond order. Using the laser light L1 oscillated from this pulse laser source makes it possible to induce ablation processing based on the multiphoton absorption process.

Further, as the laser source 20, it is possible to use a semiconductor laser source or a fiber laser source which oscillates a laser light L1 having a wavelength in the infrared range.

As described above, in the present embodiment, since a $CO_2$ laser source is used as the laser source 20, the laser source 20 is hereinafter referred to as the "$CO_2$ laser source 20".

As a mode of radiating the laser light L1 along the scheduled dividing line of the composite material 10 (a mode of scanning the laser light L1), it is conceivable, for example, that a sheet-like composite material 10 is placed on an XY 2-axis stage (not shown) and fixed (for example, fixed by suction) thereto, and the XY 2-axis stage is driven by a control signal from a control device so that the relative position of the composite material 10 on the XY two-dimensional plane with respect to the laser light L1 is changed. Further, it is also conceivable to change the position on the XY two-dimensional plane of the laser light L1 which is radiated to the composite material 10 by fixing the position of the composite material 10 and causing the laser light L1 oscillated from the $CO_2$ laser source 20 to deflect by using a Galvano mirror or a polygon mirror driven by a control signal from a control device. Further, it is also possible to use both of the scanning of the composite material 10 by use of the above described XY 2-axis stage and the scanning of the laser light L1 by use of a Galvano mirror, or the like.

The oscillation mode of the $CO_2$ laser source 20 may be pulse oscillation or continuous oscillation. The spatial intensity distribution of the laser light L1 may be a Gaussian distribution, or may be shaped into a flat-top distribution by using a diffractive optical element (not shown) or the like to suppress damage to a portion of the brittle material layer 1 other than the removal target of the laser light L1. There is no restriction on the polarization state of the laser light L1, and it may be any of linear polarization, circular polarization, and random polarization.

As a result of the laser light L1 being radiated to the resin layer 2 (a laminated film composed of a polarizing film 21, an adhesive 22, and a release liner 23) along the scheduled dividing line DL of the composite material 10, local temperature increase associated with infrared light absorption occurs in the resin which has been irradiated with the laser light L1 (portions of the polarizing film 21, the adhesive 22, and the release liner 23, which are irradiated with the laser light L1) of the resin forming the resin layer 2 so that the concerned resin scatters, and thereby the resin is removed from the composite material 10 resulting in formation of a processed groove 24 in the composite material 10. To suppress scattered matter of the resin which is removed from the composite material 10 from re-adhering to the composite material 10, it is preferable that a dust collection mechanism is provided in the vicinity of the schedule dividing line DL. To suppress increase of the groove width of the processed groove 24, preferably the laser light L1 is condensed such that a spot diameter thereof at the radiation position to the resin layer 2 is 300 $\mu$m or less, and more preferably the laser light L1 is condensed such that the spot diameter is 200 $\mu$m or less.

Note that, according to findings by the present inventors, in the case of a resin removing method based on the principle of local temperature increase associated with infrared light absorption of the resin irradiated with the laser light L1, it is possible, regardless of the type of the resin and the layer structure of the resin layer 2, to roughly estimate the input energy required to form the processed groove 24, by the thickness of the resin layer 2. Specifically, the input energy required to form the processed groove 24, which is represented by the following Formula (1), can be estimated by the following Formula (2) based on the thickness of the resin layer 2.

Input energy [mJ/mm] = Average power of Laser light L1 [mW]/processing speed [mm/sec]        (1)

$$\text{Input energy [mJ/mm]} = 0.5 \times \text{thickness of resin layer 2 [$\mu$m]} \ ... \ (2)$$

The input energy to be actually set is preferably set to 20% to 180% of the input energy estimated by the above Formula (2), and more preferably set to 50% to 150% thereof. The reason why a margin is provided for the input energy estimated in this way is because it is considered that difference may arise in the input energy required to form the processed groove 24 due to difference in thermophysical properties such as the light absorption rate (light absorption rate at the wavelength of the laser light L1) of the resin forming the resin layer 2 and the melting and decomposition points of the resin. Specifically, appropriate input energy may be determined, for example, by preparing a sample of the composite material 10 to which the dividing method according to the first embodiment is applied, and performing a preliminary test to form the processed groove 24 in the resin layer 2 of this sample with a plurality of input energies within the above-described preferable range.

[Brittle material removing step]

As shown in Figures 1B and 2, in the brittle material removing step, a processing mark 11 along the scheduled dividing line DL is formed by radiating the laser light (ultrashort pulse laser light) L2 oscillated (pulse oscillation) from the ultrashort pulse laser source 30 to the brittle material layer 1 along the scheduled dividing line DL, and thereby removing the brittle material forming the brittle material layer 1, after the resin removing step.

As the mode of radiating the laser light L2 along the scheduled dividing line DL (the mode of scanning the laser light L2), since the same mode as the above described mode of radiating the laser light L1 along the scheduled dividing line DL can be adopted, detailed description thereof is omitted here.

The brittle material forming the brittle material layer 1 is removed by utilizing the filamentation phenomenon of the laser light L2 oscillated from the ultrashort pulse laser source 30, or applying a multi-focus optical system (not shown) or Bessel beam optical system (not shown) to the ultrashort pulse laser source 30.

Note that the use of the filamentation phenomenon of the ultrashort pulse laser light and the application of the multi-focus optical system or the Bessel beam optical system to the ultrashort pulse laser source are described in Non-Patent Literature 1 described above. Further, Trumpf Corporation of Germany supplies a product relating to glass processing in which a multi-focus optical system is applied to an ultrashort pulse laser source. In this way, since it is known to use the filamentation phenomenon of the ultrashort pulse laser light and to apply the multi-focus optical system or the Bessel beam optical system to the ultrashort pulse laser source, detailed description thereof will be omitted here.

The processing mark 11 formed in the brittle material removing step of the first embodiment is perforated through holes along the scheduled dividing line DL. The pitch P of the through holes is determined by the repetition frequency of pulse oscillation and the relative moving speed (processing speed) of the laser light L2 with respect to the composite material 10. The pitch P of the through holes is set to 10 $\mu$m or less in order to easily and stably perform the composite material dividing step to be described later. More preferably, the pitch P of the through holes is set to 5 $\mu$m or less. The diameter of the through hole is often formed to be 5 $\mu$m or less.

The wavelength of the laser light L2 oscillated from the ultrashort pulse laser source 30 is preferably 500 nm to 2500 nm, which exhibits high light transmittance when the brittle material forming the brittle material layer 1 is glass. In order to effectively cause a nonlinear optical phenomenon (multiphoton absorption), the pulse width of the laser light L2 is preferably 100 picoseconds or less, and more preferably 50 picoseconds or less. The oscillation mode of the laser light L2 may be single-pulse oscillation or multi-pulse oscillation of a burst mode.

In the brittle material removing step of the first embodiment, the laser light L2 oscillated from the ultrashort pulse laser source 30 is radiated to the brittle material layer 1 from the side opposite to the processed groove 24 formed in the resin removing step. In the example shown in Figures 1A and 1B, the $CO_2$ laser source 20 is disposed on the lower side in the Z direction with respect to the composite material 10 so as to face the resin layer 2, and the ultrashort pulse laser source 30 is disposed on the upper side in the Z direction with respect to the composite material 10 so as to face the brittle material layer 1. Then, after the processed groove 24 is formed with the laser light L1 oscillated from the $CO_2$ laser source 20 in the resin removing step, the oscillation of the laser light L1 is stopped, and a processing mark 11 is formed with the laser light L2 oscillated from the ultrashort pulse laser source 30 in the brittle material removing step.

However, the present invention is not limited to this, and the $CO_2$ laser source 20 and the ultrashort pulse laser source 30 are both disposed on the same side (upper or lower side in the Z direction) with respect to the composite material 10 and, it is also possible to employ a method in which the composite material 10 is turned upside down such that the resin layer 2 faces the $CO_2$ laser source 20 in the resin removing step, and the brittle material layer 1 faces the ultrashort pulse laser source 30 in the brittle material removing step.

If the laser light L2 oscillated from the ultrashort pulse laser source 30 is radiated from the opposite side to the processed groove 24, even if a residue of the resin is generated at the bottom of the processed groove 24, an appropriate processing mark 11 can be formed on the brittle material layer 1 without being affected by the residue.

However, the present invention may, without being limited to this, further include a cleaning step of removing the residue of the resin forming the resin layer 2 by cleaning the processed groove 24 formed in the resin removing step before the brittle material removing step. Further, it is also possible to form the processing mark 11 by radiating the laser light L2 oscillated from the ultrashort pulse laser source 30 to the brittle material layer 1 from the processed groove 24 side in the brittle material removing step.

In the cleaning step, various wet-type and dry-type cleaning methods can be applied. The wet-type cleaning method can be exemplified by chemical solution immersion, ultrasonic cleaning, dry ice blasting, and micro/nano fine bubble cleaning. As a dry-type cleaning method, laser, plasma, ultraviolet rays, ozone, or the like can be used.

Since the residue of the resin forming the resin layer 2 is removed in the cleaning step, the laser light L2 will not be affected by the residue of the resin even if the laser light L2 oscillated from the ultrashort pulse laser source 30 is radiated to the brittle material layer 1 from the processed groove 24 side in the brittle material removing step so that an appropriate processing mark 11 can be formed in the brittle material layer 1.

[Composite material dividing step]

As shown in Figure 1C, in the composite material dividing step, the composite material 10 is divided by applying an external force along the scheduled dividing line DL after the brittle material removing step. In the example shown in Figure 1C, the composite material 10 is divided into composite material pieces 10a and 10b.

The method for applying an external force to the composite material 10 can be exemplified by mechanical breaking (mountain-folding), heating by infrared laser light of a portion in the vicinity of the scheduled dividing line DL, excitation by an ultrasonic roller, suction and pulling up by a sucker, and the like. When the composite material 10 is divided by mountain-folding, it is preferable to apply an external force with the brittle material layer 1 being on the mountain side (with the resin layer 2 being on the valley side) such that tensile stress acts on the brittle material layer 1.

According to the dividing method of the first embodiment described so far, after the processed groove 24 along a scheduled dividing line DL is formed by removing the resin forming the resin layer 2 in the resin removing step, a processing mark 11 along the same scheduled dividing line DL is formed by removing the brittle material forming the brittle material layer 1 in the brittle material removing step. Since the processing mark 11 formed in the brittle material removing step is perforated through holes along the scheduled dividing line DL, and the pitch of the through holes is as small as 10 $\mu$m or less, the composite material 10 can be divided with relative ease by applying an external force along the scheduled dividing line DL in the composite material dividing step.

Moreover, according to the dividing method of the first embodiment, since the brittle material forming the brittle material layer 1 is removed by radiating the laser light L2 oscillated from the ultrashort pulse laser source 30 to the brittle material layer 1 in the brittle material removing step, no crack will occur in an end face of the brittle material layer 1 after being divided. Furthermore, according to the dividing method of the first embodiment, since the resin forming the resin layer 2 is removed by radiating the laser light L1 oscillated from the $CO_2$ laser source 20 to the resin layer 2 in the resin removing step before the brittle material removing step, serious thermal deterioration will not occur in an end face of the resin layer 2 after being divided. That is, according to the dividing method of the first embodiment, it is possible to divide the composite material 10 without causing a crack in an end face of the brittle material layer 1 after being divided, and serious thermal deterioration of an end face of the resin layer 2 after being divided.

<Second embodiment>

In the dividing method according to the first embodiment described above, since the processing mark 11 formed in the brittle material removing step is perforated through holes, in order to divide the composite material 10, a composite material dividing step of applying an external force along the scheduled dividing line DL is required after the brittle material removing step.

However, in the brittle material removing step, if a relative moving speed along the scheduled dividing line DL of the laser light L2 oscillated from the ultrashort pulse laser source 30 with respect to the brittle material layer 1 is set to be small, or a repetition frequency of the pulse oscillation of the ultrashort pulse laser source 30 is set to be large, since through holes (long hole) integrally connected along the scheduled dividing line DL are formed as the processing mark, the composite material 10 will be divided even if an external force along the scheduled dividing line DL is not applied after the brittle material is removed.

The dividing method according to the second embodiment is a method which does not require application of an external force along the scheduled dividing line DL.

That is, the dividing method according to the second embodiment includes; a resin removing step of removing the resin forming the resin layer 2 and thereby forming a processed groove 24 along a scheduled dividing line DL by radiating a laser light L1 oscillated from a $CO_2$ laser source 20 to the resin layer 2 along the scheduled dividing line DL of the composite material 10; and a brittle material removing step of dividing the composite material 10 by removing the brittle material forming the brittle material layer 1 by radiating a laser light L2 oscillated from an ultrashort pulse laser source 30 to the brittle material layer 1 along the scheduled dividing line DL, after the resin removing step.

Since the dividing method according to the second embodiment is different from the dividing method according to the first embodiment only in the point that the composite material dividing step of the dividing method according to the first embodiment is obviated by dividing the composite material 10 while concurrently removing the brittle material in the brittle material removing step, and is the same in other procedures, detailed description thereof will be omitted.

Also by the dividing method according to the second embodiment, the composite material 10 can be divided without causing a crack in an end face of the brittle material layer 1 after being divided and serious thermal deterioration of an end face of the resin layer 2 after being divided.

<Third embodiment>

While, in the first and second embodiments described above, the method for dividing the composite material 10 in which the brittle material layer 1 and the resin layer 2 are laminated one layer by one layer in the thickness direction has been described, the present invention is, without being limited to this, also applicable to a case where a composite material in which a resin layer is laminated on each side of the brittle material layer is divided in the thickness direction.

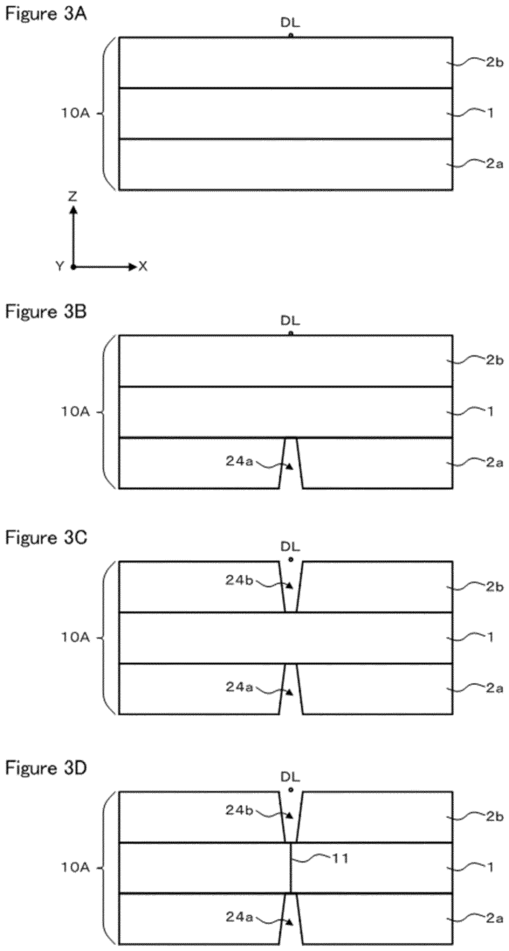

Figure 3 is an explanatory diagram to illustrate the procedure of the method for dividing a composite material according to the third embodiment of the present invention. Note that, in Figure 3, illustration of the $CO_2$ laser source 20 and the laser light L1, and the ultrashort pulse laser source 30 and the laser light L2 is omitted. Further, in Figure 3, illustration of the composite material dividing step is omitted.

As shown in Figure 3A, the dividing method according to the third embodiment is a method for dividing a composite material 10A in which the resin layer 2a, 2b is laminated on each side of the brittle material layer 1 in the thickness direction (Z direction). The method for laminating the brittle material layer 1 with the resin layers 2a and 2b, the materials for forming the brittle material layer 1 and the resin layers 2a and 2b, and the like are the same as those in the first embodiment, and therefore detailed description thereof will be omitted.

The dividing method according to the third embodiment also includes a resin removing step, a brittle material removing step, and a composite material dividing step, in the same manner as the dividing method according to the first embodiment. Hereinafter, each step will be described mainly regarding points different from the first embodiment.

[Resin removing step]

As shown in Figures 3B and 3C, in the resin removing step, a processed groove along the scheduled dividing line DL is formed by removing the resin forming the resin layer by radiating the laser light L1 oscillated from the $CO_2$ laser source 20 to the resin layer along the scheduled dividing line DL of the composite material 10A in the same manner as in the first embodiment. However, in the third embodiment, since the resin layer 2a, 2b is respectively laminated on each side of the brittle material layer 1, a processed groove 24a is formed in either one resin layer 2a as shown in Figure 3B, and a processed groove 24b is formed in the other resin layer 2b as shown in Figure 3C. In the example shown in Figures 3B and 3C, although the processed groove 24a on the lower side in the Z direction is formed first, and thereafter the processed groove 24b on the upper side in the Z direction is formed, it is of course possible to reverse the order of forming them.

For example, a pair of $CO_2$ laser sources 20 are disposed respectively on the side facing the resin layer 2a and the side facing the resin layer 2b so that the processed groove 24a can be formed in the resin layer 2a by using the $CO_2$ laser source 20 disposed on the side facing the resin layer 2a, and the processed groove 24b can be formed in the resin layer 2b by using the $CO_2$ laser source 20 disposed on the side facing the resin layer 2b. In this case, the processed groove 24a and the processed groove 24b may not be formed in order, and instead, the processed groove 24a and the processed groove 24b can be formed concurrently.

Alternatively, a single $CO_2$ laser source 20 can be disposed on the side facing either one of the resin layer 2a and the resin layer 2b so that the processed groove 24a is formed in one resin layer 2a (or the processed groove 24b is formed in the resin layer 2b) using this single $CO_2$ laser source 20, and thereafter the composite material 10A is turned upside down, and the processed groove 24b is formed in the other resin layer 2b (or the processed groove 24a is formed in the resin layer 2a) using the same $CO_2$ laser source 20.

[Brittle material removing step]

As shown in Figure 3D, in the brittle material removing step, the processing mark 11 along the scheduled dividing line DL is formed by radiating the laser light L2 oscillated from the ultrashort pulse laser source 30 to the brittle material layer 1 along the scheduled dividing line DL and thereby removing the brittle material forming the brittle material layer 1 after the resin removing step, in the same manner as in the first embodiment. As in the same manner in the first embodiment, the processing mark 11 formed in the brittle material removing step is perforated through holes along the scheduled dividing line DL, and the pitch of the through holes is set to 10 $\mu$m or less.

In the third embodiment, since the processed groove 24a, 24b is formed on each side of the brittle material layer 1, the processing mark 11 is formed by radiating the laser light L2 oscillated from the ultrashort pulse laser source 30 to the brittle material layer 1 from either one processed groove side of the processed grooves 24a and 24b. Therefore, for example, when the laser light L2 is radiated from the processed groove 24a side, it is preferable that a cleaning step of removing a residue of the resin forming the resin layer 2a by cleaning the processed groove 24a before the brittle material removing step is further included. Similarly, in the case of radiating the laser light L2 from the processed groove 24b side, a cleaning step in which the residue of the resin forming the resin layer 2b is removed by cleaning the processed groove 24b before the brittle material removing step is preferably further included.

[Composite material dividing step]

In the composite material dividing step, as in the first embodiment, the composite material 10A is divided by applying an external force along the scheduled dividing line DL after the brittle material removing step.

However, as in the second embodiment, in the brittle material removing step, if the through holes (long hole) integrally connected along the scheduled dividing line DL are formed, the composite material 10A will be divided even if no external force along the scheduled dividing line DL is applied after the brittle material is removed. That is, since the composite material 10A is divided at the same time the brittle material is removed in the brittle material removing step, the composite material dividing step of applying an external force along the scheduled dividing line DL is unnecessary.

Also by the dividing method according to the third embodiment, the composite material 10A can be divided without causing a crack in an end face of the brittle material layer 1 after being divided, and serious thermal deterioration of end faces of the resin layers 2a and 2b after being divided.

Hereinafter, an example of the result of the test for dividing the composite material 10 by using the dividing methods according to the first embodiment (Examples) and the dividing methods according to comparative examples will be described.

<Example 1>

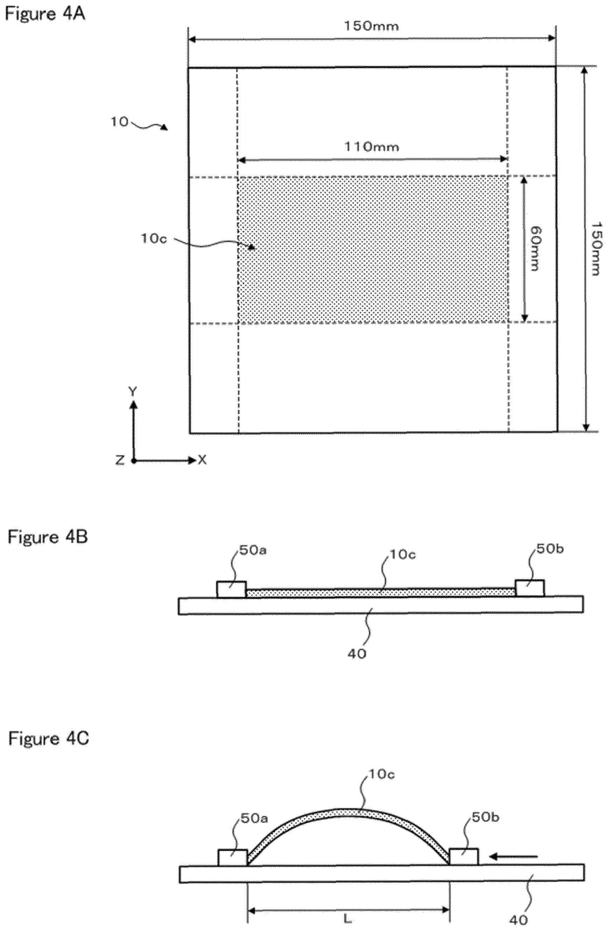

Figure 4 is a diagram schematically illustrating the outline of the test according to Example 1. Hereinafter, the outline and results of the test according to Example 1 will be described below with appropriate reference to Figures 1 and 4.

In the composite material 10 used in Example 1, the brittle material layer 1 is formed of non-alkali glass and has a thickness of 0.1 mm. The resin layer 2 is formed of a polarizing film (formed of polyvinyl alcohol) 21, an adhesive 22, and a release liner 23. The polarizing film 21 and the adhesive 22 have a total thickness of 0.08 mm, and the release liner 23 has a thickness of 0.04 mm (the total thickness of the resin layer 2 is 0.12 mm). As shown in Figure 4, the composite material 10 has a square shape whose in-plane dimensions (dimensions in an XY two-dimensional plane) are 150 mm × 150 mm. The straight line indicated by the broken line in Figure 4 is a scheduled dividing line.

In Example 1, as the $CO_2$ laser source 20, "E-400i" (Gaussian beam having an oscillation wavelength of 9.4 $\mu$m, a pulse oscillation repetition frequency of 25 kHz, and laser light L1 power of 18 W) manufactured by Coherent Inc. was used in the resin removing step, and the laser light L1 oscillated from the $CO_2$ laser source 20 was condensed to a spot diameter of 120 $\mu$m using a condenser lens and was radiated to the resin layer 2 of the composite material 10. When the relative moving speed (processing speed) of the laser light L1 with respect to the composite material 10 was set to 400 mm/sec, and as shown in Figure 4, the laser light L1 was scanned along the scheduled dividing line so as to be able to divide a composite material piece 10c having in-plane dimensions of 110 mm × 60 mm, a processed groove 24 having a groove width of 150 $\mu$m (see Figure 1) was formed.

Note that in the resin removing step of Example 1, the input energy estimated by the above described Formula (2) is 60 mJ/mm. In contrast, an actual input energy is 45 mJ/mm from the above described Formula (1), which is 75% of the estimated input energy.

Next, in the brittle material removing step, as the ultrashort pulse laser source 30, one having an oscillation wavelength of 1064 nm, a pulse width of the laser light L2 of 10 picoseconds, a repetition frequency of pulse oscillation of 50 kHz, and average power of 10 W was used to radiate the laser light L2 oscillated from the ultrashort pulse laser source 30 to the brittle material layer 1 of the composite material 10 from the opposite side (the brittle material layer 1 side) to the processed groove 24 via a multi-focus optical system. When the relative moving speed (processing speed) of the laser light L2 with respect to the composite material 10 was set to 100 mm/sec and the laser light L2 was scanned along the scheduled dividing line, perforated through holes (having a diameter of about 1 to 2 $\mu$m) having a pitch of 2 $\mu$m were formed as the processing mark 11.

Finally, in the composite material dividing step, the composite material piece 10c was divided by manually mountain-folding the composite material 10 along the scheduled dividing line.

As a result of observing and evaluating the quality of end face of the composite material piece 10c obtained in Example 1 described above with an optical microscope, no crack occurred in the brittle material layer 1 in all of the four end faces. Further, a discolored region of the resin layer 2 associated with thermal deterioration lied within 100 $\mu$m or less from the end face to the inside, and no serious thermal deterioration occurred.

Further, the composite material piece 10c was subjected to a two-point bending test. In the two-point bending test, first, as shown in Figure 4B, the composite material piece 10c was placed on a fixed portion 40 of a uniaxial stage that included the fixed portion 40 and movable portions 50a and 50b, and the composite material piece 10c was interposed between the movable portions 50a and 50b. Next, as shown in Figure 4C, while the position of the movable portion 50a was fixed, the movable portion 50b was moved toward the movable portion 50a at a speed of 20 mm/min, thus applying bending stress to the composite material piece 10c. Then, the bending strength of the composite material piece 10c was evaluated by the value of the spacing L between the movable portion 50a and the movable portion 50b when the composite material piece 10c failed.

The bending strength (spacing L) obtained by the above described two-point bending test for the composite material piece 10c was 75 mm. Since preferable bending strength (spacing L) is 85 mm or less, it can be said that the composite material piece 10c had sufficient bending strength.

<Example 2>

When the test was conducted under the same conditions as in Example 1 excepting that the processing speed was changed to 150 mm/sec (thereby, perforated through holes (a diameter of about 1 to 2 $\mu$m) with a pitch of 3 $\mu$m were formed as the processing mark 11) in the brittle material removing step, it was possible to obtain end face quality and bending strength of the composite material piece 10c equivalent to those in Example 1.

<Example 3>

When the test was conducted under the same conditions as in Example 1 excepting that the repetition frequency of the pulse oscillation was changed to 30 kHz and the processing speed was changed to 250 mm/sec (thereby, perforated through holes (a diameter of about 1 to 2 $\mu$m) with a pitch of 8.3 $\mu$m were formed as the processing mark 11) in the brittle material removing step, it was possible to obtain end face quality and bending strength of the composite material piece 10c equivalent to those in Example 1.

<Comparative Example 1>

When the test was conducted under the same conditions as in Example 1 excepting that the resin removing step was not conducted, since the processed groove 24 was not formed in the resin layer 2, the composite material piece 10c was not able to be divided even if it was mountain-folded in the composite material dividing step. For this reason, when the resin layer 2 was forcibly torn to divide the composite material piece 10c, the quality of end face of the composite material piece 10c deteriorated.

<Comparative Example 2>

When the test was conducted under the same conditions as in Example 1 excepting that the order of the resin removing step and the brittle material removing step was replaced, the end face of the resin layer 2 was thermally deteriorated in the brittle material removing step which was conducted earlier. The bending strength of the obtained composite material piece 10c was equivalent to that of Example 1, but the discolored region associated with thermal deterioration of the resin layer 2 lied within 200 $\mu$m from the end face to the inside, which was larger than that of Example 1. In addition, local peeling was confirmed at the interface between the brittle material layer 1 and the resin layer 2.

<Comparative Example 3>

The test was conducted under the same conditions as in Example 1 excepting that the power of the laser light L1 oscillated from the $CO_2$ laser source 20 was changed to 40 W in the resin removing step, and the brittle material removing step was not conducted. In the above described resin removing step, the processed groove 24 was formed in the resin layer 2 and a shallow streak was also formed in the brittle material layer 1. Therefore, in the composite material dividing step, although the composite material 10 was manually mountain-folded along this streak, it was not able to be divided as indicated by the scheduled dividing line, and the dimensional accuracy of the composite material piece 10c deteriorated.

<Comparative Example 4>

When the test was conducted under the same conditions as in Example 1 excepting that the processing speed was changed to 600 mm/sec (thereby, perforated through holes (a diameter of about 1 to 2 $\mu$m) with a pitch of 12 $\mu$m were formed as the processing mark 11) in the brittle material removing step, dividing of the composite material piece 10c was possible in the composite material dividing step. However, an area which was deviated from the scheduled dividing line was occasionally observed, indicating deterioration of the dimensional accuracy of the composite material piece 10c.

[Reference Signs List]

1: Brittle material layer
2: Resin layer
10: Composite material
11: Processing mark
20: $CO_2$ laser source
24: Processed groove
30: Ultrashort pulse laser source
DL: Scheduled dividing line
L 1: Laser light
L2: Laser light

**Claims**

1. A method for dividing a composite material (10) in which a brittle material layer (1) and a resin layer (2) are laminated, the method being **characterised by**:

   a resin removing step of forming a processed groove (24) along a scheduled dividing line of the composite material (10) by radiating a laser light (L1) oscillated from a laser source (20) to the resin layer (2) along the scheduled dividing line (DL) and thereby removing the resin forming the resin layer (2);
   a brittle material removing step of forming a processing mark (11) along the scheduled dividing line (DL) by radiating a laser light (L2) oscillated from an ultrashort pulse laser source (30) to the brittle material layer (1)

along the scheduled dividing line (DL) and thereby removing the brittle material forming the brittle material layer (1), after the resin removing step; and

a composite material (10) dividing step of dividing the composite material (10) by applying an external force along the scheduled dividing line (DL), after the brittle material removing step, wherein

the processing mark (11) formed in the brittle material removing step is perforated through holes along the scheduled dividing line, and a pitch (P) of the through holes is 10 μm or less.

2. A method for dividing a composite material (10) in which a brittle material layer (1) and a resin layer (2) are laminated, the method being **characterised by**:

a resin removing step of removing the resin forming the resin layer (2) and thereby forming a processed groove (24) along a scheduled dividing line (DL) of the composite material (10) by radiating a laser light (L1) oscillated from a laser source (20) to the resin layer (2) along the scheduled dividing line (DL);

a brittle material removing step radiating a laser light (L2) oscillated from an ultrashort pulse laser source (30) to the brittle material layer (1) along the scheduled dividing line (DL) and thereby removing the brittle material forming the brittle material layer (1) after the resin removing step;

a composite material (10) dividing step of dividing the composite material (10) performed concurrently with the brittle material removing step.

3. The method for dividing a composite material (10) according to claim 1 or 2, wherein in the brittle material removing step, the laser light (L2) oscillated from the ultrashort pulse laser source (30) is radiated to the brittle material layer (1) from an opposite side to the processed groove (24) formed in the resin removing step.

4. The method for dividing a composite material (10) according to claim 1 or 2, further comprising

a cleaning step of removing a residue of the resin forming the resin layer (2) by cleaning the processed groove (24) formed in the resin removing step before the brittle material removing step, wherein in the brittle material removing step, the laser light (L2) oscillated from the ultrashort pulse laser (30) source is radiated to the brittle material layer (1) from the processed groove (24) side.

5. The method for dividing a composite material (10) according to any of claims 1 to 4, wherein in the brittle material removing step, the brittle material forming the brittle material layer (1) is removed by utilizing a filamentation phenomenon of the laser light (L2) oscillated from the ultrashort pulse laser source (30), or applying a multi-focus optical system or a Bessel beam optical system to the ultrashort pulse laser source (30).

6. The method for dividing a composite material (10) according to any of claims 1 to 5, wherein the laser source (20) used in the resin removing step is a $CO_2$ laser source.

7. The method for dividing a composite material (10) according to any of claims 1 to 6, wherein the resin layer (2) is an optical film.


**Patentansprüche**

1. Verfahren zum Teilen eines Verbundstoffs (10), bei dem eine spröde Materialschicht (1) und eine Harzschicht (2) laminiert sind, wobei das Verfahren **gekennzeichnet ist durch**:

einen Harzentfernungsschritt zum Bilden einer bearbeiteten Rille (24) entlang einer vorgesehenen Teilungslinie des Verbundstoffs (10) **durch** Bestrahlen der Harzschicht (2) mit einem von einer Laserquelle (20) oszillierten Laserlicht (L1) entlang der vorgesehenen Teilungslinie (DL) und wodurch das die Harzschicht (2) bildende Harz entfernt wird;

einen Schritt zum Entfernen von sprödem Material zum Bilden einer Bearbeitungsmarkierung (11) entlang der vorgesehenen Teilungslinie (DL) **durch** Bestrahlen der spröden Materialschicht (1) mit einem von einer Ultrakurzpulslaserquelle (30) oszillierten Laserlicht (L2) entlang der vorgesehenen Teilungslinie (DL) und wodurch das spröde Material, das die spröde Materialschicht (1) bildet, nach dem Harzentfernungsschritt entfernt wird; und

einen Verbundstoff- (10) -Teilungsschritt zum Teilen des Verbundstoffs (10) **durch** Aufbringen einer äußeren Kraft entlang der vorgesehenen Teilungslinie (DL) nach dem Schritt zum Entfernen von sprödem Material, wobei die im Schritt zum Entfernen von sprödem Material gebildete Bearbeitungsmarkierung (11) perforierte Durchgangslöcher entlang der vorgesehenen Teilungslinie sind, und ein Abstand (P) der Durchgangslöcher 10 $\mu$m oder weniger beträgt.

2. Verfahren zum Teilen eines Verbundstoffs (10), bei dem eine spröde Materialschicht (1) und eine Harzschicht (2) laminiert sind, wobei das Verfahren **gekennzeichnet ist durch**:

    einen Harzentfernungsschritt zum Entfernen des Harzes, das die Harzschicht (2) bildet, und wodurch eine bearbeitete Rille (24) entlang einer vorgesehenen Teilungslinie (DL) des Verbundstoffs (10) **durch** Bestrahlen der Harzschicht (2) mit einem von einer Laserquelle (20) oszillierten Laserlicht (L1) entlang der vorgesehenen Teilungslinie (DL) gebildet wird;
    einen Schritt zum Entfernen von sprödem Material, wobei ein von einer Ultrakurzpulslaserquelle (30) oszilliertes Laserlicht (L2) die spröde Materialschicht (1) entlang der vorgesehenen Teilungslinie (DL) bestrahlt, und wodurch das spröde Material, das die spröde Materialschicht (1) bildet, nach dem Harzentfernungsschritt entfernt wird;
    einen Verbundstoff- (10) -Teilungsschritt zum Teilen des Verbundstoffs (10), der gleichzeitig mit dem Schritt zum Entfernen von sprödem Material durchgeführt wird.

3. Verfahren zum Teilen eines Verbundstoffs (10) nach Anspruch 1 oder 2, wobei
bei dem Schritt zum Entfernen von sprödem Material das von der Ultrakurzpulslaserquelle (30) oszillierte Laserlicht (L2) von einer der beim Harzentfernungsschritt gebildeten bearbeiteten Rille (24) gegenüberliegenden Seite die spröde Materialschicht (1) bestrahlt.

4. Verfahren zum Teilen eines Verbundstoffs (10) nach Anspruch 1 oder 2, weiter umfassend

    einen Reinigungsschritt zum Entfernen eines Rückstands des Harzes, das die Harzschicht (2) bildet, durch Reinigen der im Harzentfernungsschritt vor dem Schritt zum Entfernen von sprödem Material gebildeten bearbeiteten Rille (24), wobei
    bei dem Schritt zum Entfernen von sprödem Material das von der Ultrakurzpulslaser- (30) -quelle oszillierte Laserlicht (L2) von der Seite der bearbeiteten Rille (24) aus die spröde Materialschicht (1) bestrahlt.

5. Verfahren zum Teilen eines Verbundstoffs (10) nach einem der Ansprüche 1 bis 4, wobei
bei dem Schritt zum Entfernen von sprödem Material das spröde Material, das die spröde Materialschicht (1) bildet, durch Ausnutzen eines Filamentationsphänomens des von der Ultrakurzpulslaserquelle (30) oszillierenden Laserlichts (L2) oder durch Anwenden eines Multifokus-Optiksystems oder eines Bessel-Strahloptiksystems auf die Ultrakurzpulslaserquelle (30) entfernt wird.

6. Verfahren zum Teilen eines Verbundstoffs (10) nach einem der Ansprüche 1 bis 5, wobei
die im Harzentfernungsschritt verwendete Laserquelle (20) eine $CO_2$-Laserquelle ist.

7. Verfahren zum Teilen eines Verbundstoffs (10) nach einem der Ansprüche 1 bis 6, wobei
die Harzschicht (2) ein optischer Film ist.

**Revendications**

1. Procédé pour la séparation d'un matériau composite (10) dans lequel une couche de matériau fragile (1) et une couche de résine (2) sont stratifiées, le procédé étant **caractérisé par** :

    une étape d'élimination de résine consistant à former une rainure traitée (24) le long d'une ligne de séparation planifiée du matériau composite (10) par rayonnement d'une lumière laser (L1) oscillée à partir d'une source laser (20) vers la couche de résine (2) le long de la ligne de séparation planifiée (DL) et ainsi à éliminer la résine formant la couche de résine (2) ;
    une étape d'élimination de matériau fragile consistant à former une marque de traitement (11) le long de la ligne de séparation planifiée (DL) par rayonnement d'une lumière laser (L2) oscillée à partir d'une source laser à impulsions ultracourtes (30) vers la couche de matériau fragile (1) le long de la ligne de séparation planifiée (DL) et ainsi à éliminer le matériau fragile formant la couche de matériau fragile (1), après l'étape d'élimination de résine ; et

une étape de séparation de matériau composite (10) consistant à séparer le matériau composite (10) par application d'une force externe le long de la ligne de séparation planifiée (DL), après l'étape d'élimination de matériau fragile, dans lequel

la marque de traitement (11) formée dans l'étape d'élimination de matériau fragile est perforée de trous traversants le long de la ligne de séparation planifiée, et un pas (P) des trous traversants est de 10 $\mu$m ou moins.

2. Procédé pour la séparation d'un matériau composite (10) dans lequel une couche de matériau fragile (1) et une couche de résine (2) sont stratifiées, le procédé étant **caractérisé par** :

une étape d'élimination de résine consistant à éliminer la résine formant la couche de résine (2) et ainsi à former une rainure traitée (24) le long d'une ligne de séparation planifiée (DL) du matériau composite (10) par rayonnement d'une lumière laser (L1) oscillée à partir d'une source laser (20) vers la couche de résine (2) le long de la ligne de séparation planifiée (DL) ;

une étape d'élimination de matériau fragile consistant à rayonner une lumière laser (L2) oscillée à partir d'une source laser à impulsions ultracourtes (30) vers la couche de matériau fragile (1) le long de la ligne de séparation planifiée (DL) et ainsi à éliminer le matériau fragile formant la couche de matériau fragile (1) après l'étape d'élimination de résine ;

une étape de séparation de matériau composite (10) consistant à séparer le matériau composite (10) mise en oeuvre simultanément à l'étape d'élimination de matériau fragile.

3. Procédé pour la séparation d'un matériau composite (10) selon la revendication 1 ou la revendication 2, dans lequel dans l'étape d'élimination de matériau fragile, la lumière laser (L2) oscillée à partir de la source laser à impulsions ultracourtes (30) est rayonnée vers la couche de matériau fragile (1) depuis un côté opposé à la rainure traitée (24) formée dans l'étape d'élimination de résine.

4. Procédé pour la séparation d'un matériau composite (10) selon la revendication 1 ou la revendication 2, comprenant en outre

une étape de nettoyage consistant à éliminer un résidu de la résine formant la couche de résine (2) par nettoyage de la rainure traitée (24) formée dans l'étape d'élimination de résine avant l'étape d'élimination de matériau fragile, dans lequel

dans l'étape d'élimination de matériau fragile, la lumière laser (L2) oscillée à partir de la source laser à impulsions ultracourtes (30) est rayonnée vers la couche de matériau fragile (1) à partir du côté rainure traitée (24).

5. Procédé pour la séparation d'un matériau composite (10) selon l'une quelconque des revendications 1 à 4, dans lequel

dans l'étape d'élimination de matériau fragile, le matériau fragile formant la couche de matériau fragile (1) est éliminé en utilisant un phénomène de filamentation de la lumière laser (L2) oscillée à partir de la source laser à impulsions ultracourtes (30), ou en appliquant un système optique à foyers multiples ou un système optique à faisceau de Bessel à la source laser à impulsions ultracourtes (30).

6. Procédé pour la séparation d'un matériau composite (10) selon l'une quelconque des revendications 1 à 5, dans lequel

la source laser (20) utilisée dans l'étape d'élimination de résine est une source laser à COz.

7. Procédé pour la séparation d'un matériau composite (10) selon l'une quelconque des revendications 1 à 6, dans lequel

la couche de résine (2) est un film optique.

Figure 1A

Figure 1B

Figure 1C

Figure 2A

Figure 2B

Figure 3A

Figure 3B

Figure 3C

Figure 3D

Figure 4A

Figure 4B

Figure 4C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6239461 B

- TW 201219142 A

**Non-patent literature cited in the description**

- **JOHN LOPEZ et al.** GLASS CUTTING USING ULTRASHORT PULSED BESSEL BEAMS. *International Congress on Applications of Lasers & Electro-Optics (ICALEO),* 20 December 2017, https://www.researchgate.net/publication/284617626_GLASS_CUTTING_USING_ULTRASHORT_PULSED_BESSEL_BEAMS